# EUROPÄISCHE PATENTSCHRIFT

(11) **EP 3 126 699 B1**
(45) Veröffentlichungstag und Bekanntmachung des Hinweises auf die Patenterteilung: **27.02.2019**
(21) Anmeldenummer: 14758494.0
(22) Anmeldetag: 11.08.2014
(51) Int. Cl.: F16D 48/04, F16D 48/02

(54) **KUPPLUNGSBETÄTIGUNGSVORRICHTUNG**
CLUTCH ACTUATION DEVICE
DISPOSITIF D'ACTIONNEMENT D'EMBRAYAGE

(30) Priorität: 31.03.2014 DE 102014205965
(43) Veröffentlichungstag der Anmeldung: 08.02.2017
(73) Patentinhaber: Schaeffler Technologies AG & Co. KG, 91074 Herzogenaurach (DE)
(72) Erfinder: GLEBOV, Alexander, 77815 Bühl (DE); BARRERA, Alan, 76133 Karlsruhe (DE)
(86) Internationale Anmeldenummer: PCT/DE2014/200394
(87) Internationale Veröffentlichungsnummer: WO 2015/149730

(56) Entgegenhaltungen:
- EP-A2- 1 674 736
- WO-A1-2008/028446
- DE-A1- 3 422 153

## Beschreibung

Die Erfindung betrifft eine Kupplungsbetätigungsvorrichtung, insbesondere für ein Kraftfahrzeug.

Eine hydraulische Kupplungsbetätigung wird üblicher Weise mittels einer Kupplungsbetätigungsvorrichtung im Antriebsstrang eines Kraftfahrzeuges zur Betätigung einer Fahrzeugkupplung durchgeführt. Bekannt ist, dass mittels der hydraulischen Kupplungsbetätigung mit einem Geberzylinder und einem Nehmerzylinder unter Verwendung mechanischer Komponenten, wie beispielsweise einem Ausrücklager und einer Kupplungs-Tellerfeder, die Fahrzeugkupplung betätigt werden kann. Typischerweise wird der Nehmerzylinder durch den Geberzylinder betätigt, wobei die Druckräume des Nehmer- und des Geberzylinders über eine hydraulische Druckleitung miteinander verbunden sind. Ein Kolben des Geberzylinders wird typischerweise durch ein Pedal, beispielsweise ein Fußpedal, mit einer Druckkraft beaufschlagt. Diese Druckkraft erzeugt einen hydraulischen Druck in der Kupplungsbetätigung, mit dem der Nehmerzylinder und schließlich die Fahrzeugkupplung betätigt werden.

Aus dem Dokument DE 10 2013 214 204 A1 ist eine hydraulische Kupplungsbetätigungsvorrichtung bekannt, die einen Geberzylinder, einen Nehmerzylinder und eine diese verbindende Druckleitung aufweist, wobei in der Druckleitung eine hydraulische Übersetzungseinrichtung angeordnet ist, die eine veränderbare Übersetzung von Druck bzw. Volumenstrom zwischen dem Geberzylinder und dem Nehmerzylinder bewirkt. Die Druckschrift WO 2008/028446 A1 offenbart eine Kupplungsbetätigungsvorrichtung gemäß dem Oberbegriff des Patentanspruchs 1.

Eine Aufgabe der Erfindung ist es eine verbesserte Kupplungsbetätigungsvorrichtung zu schaffen.

Diese Aufgabe wird mit einer Kupplungsbetätigungsvorrichtung mit den Merkmalen von Anspruch 1 gelöst.

Vorteilhafte Ausgestaltungen der Kupplungsbetätigungsvorrichtung ergeben sich aus den abhängigen Ansprüchen.

Die Kupplungsbetätigungsvorrichtung, insbesondere ein hydraulische Kupplungsbetätigungsvorrichtung, insbesondere für ein Kraftfahrzeug, weist einen, einen Geberzylinder aufweisenden, Geber, einen, einen Nehmerzylinder aufweisenden, Nehmer und eine, den Geberzylinder und den Nehmerzylinder verbindende, Druckleitung auf, wobei in der Druckleitung ein Ventil angeordnet ist, wodurch die Druckleitung in eine Nehmer-Druckteilleitung und eine Geber-Druckteilleitung geteilt wird, wobei in einer Parallelschaltung zur Druckleitung eine ansteuerbare Einrichtung angeordnet ist. Hierdurch kann die Druckleitung und damit die Verbindung zwischen dem Geberzylinder und dem Nehmerzylinder mittels des Ventils geöffnet und geschlossen werden. Die ansteuerbare Einrichtung, insbesondere der Aktuator, ist mit einem Motor verbunden und durch den Motor betreibbar. Dies ist insbesondere für ein Kraftfahrzeug mit Automatikbetrieb von Vorteil. Der Motor kann durch Drücken des Betätigungskopfes aktiviert werden, insbesondere bestromt werden. Der Geberzylinder ist bevorzugt mit einer Gebereinrichtung verbunden, beispielsweise einem Kupplungspedal, insbesondere einem Fußpedal. Der Nehmerzylinder ist bevorzugt direkt mit der Kupplung verbunden. Die ansteuerbare Einrichtung weist bevorzugt zwei axial angeordnete Zylinder auf. Die Zylinder arbeiten hierbei bevorzugt gegeneinander. Das Aus- und/oder Einrücken der Kupplung kann dadurch komfortabler gestaltet werden, insbesondere bei einer Start/Stopp-Situation, beim Anfahren, und/oder in einer Stau-Situation.

In einer Ausgestaltung der Kupplungsbetätigungsvorrichtung sind in Parallelschaltung zur Druckleitung ein Aktuator mit einem Aktuatorzylinder und einem Aktuatorkolben sowie ein Speicher mit einem Speicherzylinder und einem Speicherkolben angeordnet, wobei der Aktuator mit der Nehmer-Druckteilleitung und der Speicher mit der Geber-Druckteilleitung verbunden sind. Der Aktuator kann hierbei unterstützend wirken. Der Aktuator und der Speicher können die ansteuerbare Einrichtung darstellen. Die Ansteuerung der ansteuerbaren Einrichtung, insbesondere des Aktuators, kann aktiviert werden, indem der Fahrer des Kraftfahrzeugs eine Betätigungseinrichtung, die bevorzugt an der Konsole des Kraftfahrzeugs angeordnet ist, bedient. Das kann ein Betätigungsknopf sein, der vom Fahrer gedrückt wird, wenn die ansteuerbare Einrichtung eingeschaltet werden soll. Der Aktuator kann deaktiviert, beispielsweise ausgeschaltet, werden, indem der Geber betätigt wird, wodurch das Ventil zwischen dem Geberzylinder und dem Nehmerzylinder geöffnet werden kann.

Bevorzugt sind der Aktuatorzylinder und der Speicherzylinder gegeneinander angeordnet, insbesondere gegeneinander arbeitend angeordnet.

In einer Ausgestaltung sind der Aktuatorkolben und der Speicherkolben mittels einer Federeinrichtung mechanisch verbunden. Somit stehen der Speicherkolben und der Aktuatorkolben in Wirkverbindung und können mechanisch gegeneinander wirken. Eine Ursprungsposition des Aktuators und des Speichers kann mittels der Federkonstanten der Feder eingestellt werden.

Bevorzugt ist das Ventil ein erstes Ventil, insbesondere ein elektrisches Ventil, und ist elektrisch ansteuerbar, insbesondere öffenbar und/oder verschließbar.

Bevorzugt ist das Ventil so eingerichtet, dass das Ventil bei einem Druck p_{Geber}>p_{Nehmer} geöffnet ist. Der Druck der Hydraulikflüssigkeit auf das Ventil p_{Geber} kann entweder durch das Kupplungspedal aufgebaut werden oder durch einen vom Speicher aufgebauten Druck in der zwischen dem Speicher und dem Geber angeordneten Druckteilleitung anliegen.

Bevorzugt ist eine Aktuatorkolbenfläche gleich einer Speicherkolbenfläche. Somit kann ein Hub des Aktuatorkolbens gleich einem Hub des Speicherkolbens sein.

Insgesamt bewirkt die Kupplungsbetätigungsvorrichtung, dass während des normalen Fahrbetriebs der Geberzylinder und der Nehmerzylinder direkt betätigt werden können und der Aktuator und der Speicher mit Hydraulikflüssigkeit gefüllt sind. Um den Aktuator zu aktivieren, kann der Fahrer des Kraftfahrzeugs auf einen Betätigungsknopf, der bevorzugt an der Konsole des Kraftfahrzeug angeordnet ist, drücken, wodurch der mit dem Aktuator verbundene Motor angesteuert wird und der Aktuator axial bewegt werden kann. Dadurch kann die in dem Aktuatorzylinder befindliche Hydraulikflüssigkeit in den Speicher gedrückt werden. Das parallel angeordnete Ventil kann schließen, wodurch die Verbindung zwischen Geberzylinder und Nehmerzylinder unterbrochen werden kann. Dadurch steht die unter einem gewissen Druck befindliche Hydraulikflüssigkeit zwischen dem Aktuator und dem Nehmerzylinder an. Der Fahrer kann dadurch das Kupplungspedal loslassen. Dies stellt einen erhöhten Komfort für den Fahrer dar.

Besonders vorteilhaft ist es, wenn zwischen dem Geberzylinder und dem Speicherzylinder ein weiteres Ventil angeordnet ist, welches die Geber-Druckteilleitung im stromlosen Zustand abschließt. Dadurch kann die Betätigung unmittelbar zwischen Geberzylinder und Nehmerzylinder beispielsweise pedalbetätigt erfolgen.

Dabei ist es insbesondere vorteilhaft, wenn das weitere Ventil im normalen, bestromten Betriebszustand geöffnet ist. So ist im bestromten Zustand möglich, die ursprüngliche beabsichtigte Betätigungsstrategie zu vollziehen.

Besonders vorteilhaft ist es, wenn das weitere Ventil ein Gehäuse und ein Ventilelement aufweist, das von einer Feder gegen eine Öffnung beaufschlagt ist und einen Aktuator, wie insbesondere einen Elektromagneten, aufweist, der im bestromten Zustand das Ventilelement entgegen der Rückstellkraft der Feder von der Öffnung abhebt. Dadurch wird eine einfache Funktionalität erzielt, bei welcher das Ventil stromlos geschlossen ist. So übt der Aktuator im stromlosen Zustand im Wesentlichen keine Kraftwirkung auf das Ventilelement aus, so dass die Feder das Ventilelement gegen die Öffnung beaufschlagt und diese verschließt.

Die Aufgabe wird ebenfalls mit einem Schaltgetriebe, insbesondere für ein Kraftfahrzeug, mit einer erfindungsgemäßen hydraulischen Kupplungsbetätigung gelöst. Die Kupplungsbetätigungsvorrichtung kann hierbei sowohl in einem manuellen Schaltgetriebe als auch in einem automatisierten Schaltgetriebe eingesetzt werden.

Weitere vorteilhafte Ausgestaltungen sind durch die nachfolgende Figurenbeschreibung und durch die Unteransprüche beschrieben.

Die Erfindung wird nachfolgend auf der Grundlage zumindest eines Ausführungsbeispiels anhand der Figuren der Zeichnung näher erläutert. Es zeigen:
- Fig. 1: eine schematische Darstellung einer Kupplungsbetätigungsvorrichtung,
- Fig. 2: die Kupplungsbetätigungsvorrichtung im manuellen Modus,
- Fig. 3: die Kupplungsbetätigungsvorrichtung mit eingeschaltetem Aktuator,
- Fig. 4: die Kupplungsbetätigungsvorrichtung im Automatikmodus,
- Fig. 5: die Kupplungsbetätigungsvorrichtung mit ausgeschaltetem Aktuator,
- Fig. 6: eine Kupplungsbetätigungsvorrichtung gemäß Fig. 1 mit einem weiteren Ventil, und
- Fig. 7: eine vergrößerte Darstellung des weiteren Ventils.

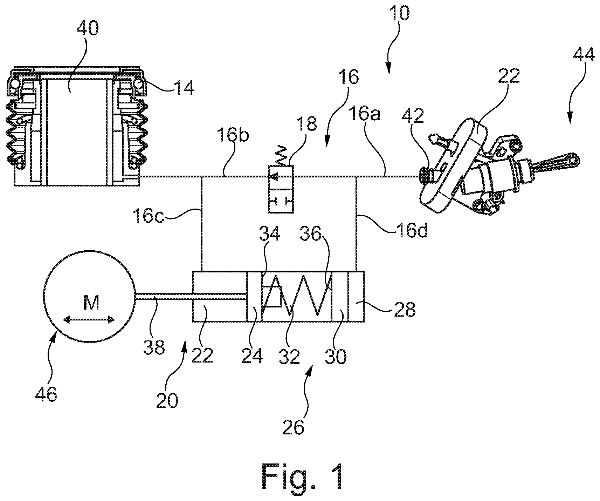

Die Figur 1 zeigt in schematischer Darstellung eine Kupplungsbetätigungsvorrichtung 10, die in einen Antriebsstrang eines Kraftfahrzeuges eingebaut werden kann.

Die Kupplungsbetätigungsvorrichtung 10 weist einen Geber 12, einen Nehmer 14 und eine diese verbindende Druckleitung 16 auf, die durch ein Ventil 18 in eine Geber-Druckteilleitung 16a und eine Nehmer-Druckteilleitung 16b aufgeteilt werden kann. Parallel zur Druckleitung 16 und zum Ventil 18 ist eine ansteuerbare Einrichtung angeordnet, die einen Aktuator 20 mit einem Aktuatorzylinder 22 und einem Aktuatorkolben 24 sowie einen Speicher 26 mit einem Speicherzylinder 28 und einem Speicherkolben 30 aufweist.

Der Aktuator 20 und der Speicher 26 sind mit einer Federeinrichtung 32 mechanisch verbunden, wodurch der Speicher 26 und der Aktuator 20 in Wirkverbindung stehen. Der Aktuatorzylinder 22 und der Speicherzylinder 28 sind gegeneinander angeordnet, insbesondere gegeneinander arbeitend, und stellen zwei gegeneinander angeordnete hydraulische Zylinder dar. Der Speicher 26 ist axial zu dem Aktuator 20 angeordnet, wobei eine Aktuatorkolbenfläche 34 des Aktuators 20 und eine Speicherkolbenfläche des Speichers 36 gleich sind.

Der Aktuator 20 ist mittels einer Aktuator-Druckteilleitung 16c mit dem Nehmer 14 verbunden und der Speicher 26 ist mittels einer Speicher-Druckteilleitung 16d mit der Geber-Druckteilleitung 16a verbunden. Mit dem Begriff "verbunden" ist jeweils eine fluidische Verbindung gemeint, sodass eine Hydraulikflüssigkeit zwischen dem Aktuatorzylinder 22, einem Nehmerzylinder 40, dem Speicherzylinder 28 und einem Geberzylinder 42 und somit in den Druckteilleitungen 16a, 16b, 16c und 16d bewegbar ist.

Die Kupplungsbetätigungsvorrichtung 10 stellt ein geschlossenes System dar. Hierbei ist der Aktuator 20 über eine Verbindung 38 mit einem Motor 46 verbunden, der wiederum ansteuerbar ist, insbesondere durch den Fahrer vom Fahrzeuginnenraum aus ansteuerbar ist. Die Aktivierung des Aktuators 20 erfolgt beispielsweise durch Drücken eines nicht dargestellten Betätigungsknopfes, der typischerweise an einer nicht dargestellten Konsole des Kraftfahrzeugs angeordnet ist. Der Betätigungsknopf realisiert hierbei die Ansteuerung des Motors 46.

Der Speicherkolben 30 wird typischerweise mittels der Feder 32 so betätigt, dass der Speicherzylinder 28 ohne Druck immer entleert ist. Beim manuellen Betätigen des Gebers 12, typischerweise dem Treten eines Kupplungspedals 44, verschiebt der Aktuatorkolben 22 den Speicherkolben 28 so, dass der Speicherzylinder 28 entleert wird. Somit kann der Speicherkolben 28 in Position gehalten werden.

Bei der automatischen Betätigung kann der Fahrer einmalig das Kupplungspedal 44 drücken, damit eine nicht dargestellt Kupplung geöffnet wird. Der Aktuator 20 kann angesteuert werden, der Aktuator 20 kann sich axial bewegen und die Hydraulikflüssigkeit kann in den Speicher 26 verschoben werden. Dabei schließt das Ventil 18, wodurch die Hydraulikflüssigkeit am Nehmer 14 ansteht. Hierbei wird typischerweise das Ventil 18 bestromt und die Verbindung zwischen dem Geber 12 und dem Nehmer 14 wird geschlossen, wobei die Geber-Druckteilleitung 16a und die Nehmer-Druckteilleitung 16b temporär getrennt sind.

Der Fahrer kann das Kupplungspedal 46 loslassen und die Hydraulikflüssigkeit wird vom Speicher 26 in den Geber 12 fließen. Hierbei ist das Ventil 18 so ausgelegt, dass bei einen Druck vom Geber 12, der mit p_{Geber} bezeichnet wird, und der größer ist als der am Nehmer 14 anliegende Druck ist, der mit P_{Nehmer} bezeichnet wird, die Hydraulikflüssigkeit durchgelassen wird. Die Druckteilleitungen 16a und 16b bilden hierbei wieder eine durchgängige Druckleitung 16 aus. Hierbei ist das Ventil 18 dann geöffnet. Somit ist sichergestellt, dass der Fahrer immer die Kontrolle übernehmen kann, indem das Kupplungspedal 46 gedrückt wird.

Während des normalen Fahrbetriebes, insbesondere beim Gangwechsel, betätigt der Fahrer das Kupplungspedal 44, wodurch der Geber 12 direkt den Nehmer 14 betätigt. Hierbei sind der Aktuator 20 und der Speicher 26 mit der Hydraulikflüssigkeit gefüllt und in einer Position, die typischerweise als Ursprungsposition bezeichnet wird. Die Feder 32 kann hierbei mittels der Federkonstanten den Abstand zwischen Speicherkolben 30 und Aktuatorkolben 24 definieren.

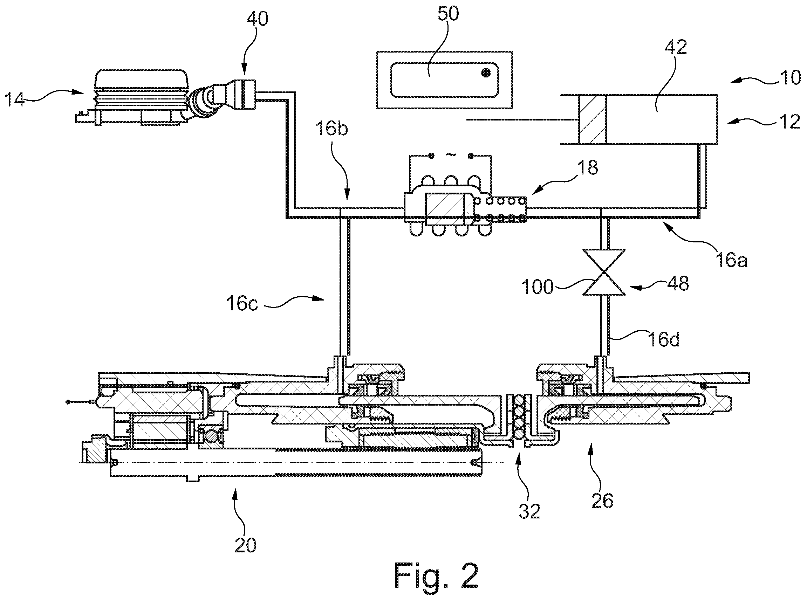

Figur 2 zeigt die Kupplungsbetätigungsvorrichtung 10 im manuellen Modus. Gleiche Gegenstände sind mit den gleichen Bezugszeichen bezeichnet wie in Figur 1 und es wird auf die Beschreibung zu Figur 1 verwiesen.

Zusätzlich weist die Kupplungsbetätigungsvorrichtung 10 ein Leitung auf, welches zwischen dem Geber 12 und dem Speicher 26 angeordnet ist. Ferner ist der Betätigungsknopf 50 gezeigt. Der Betätigungsknopf 50 wird auch als Stau- und/oder Parkassistent-Einschalter 50 oder kurz als Stau- und/oder Parkassistent 50 bezeichnet.

Wenn der Fahrer das Kupplungspedal 44 betätigt, wird die Hydraulikflüssigkeit durch das Ventil 18 in den Nehmer 14 verschoben. Der Nehmer 14 wird "normal" ohne Mitwirkung des Aktuators 20 betätigt. Hierbei wird im Aktuator 20 und im Speicher 26 ein Druck aufgebaut. Wegen des Drucks werden der Speicherkolben 30 und der Nehmerkolben 24 mit der gleichen Kraft beaufschlagt und wirken gegeneinander. Das Ventil 48 ist stromlos geschlossen. Ist es bestromt, so ist die Druckteilleitung 16d geöffnet.

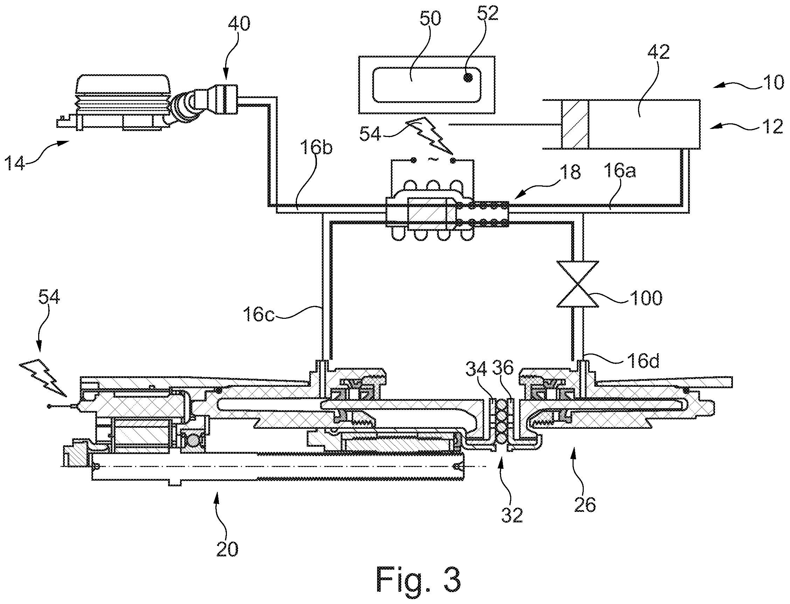

Figur 3 zeigt in schematischer Darstellung die Kupplungsbetätigungsvorrichtung 10 im "Stau-Modus" und/oder beim "Park-Modus". Gleiche Gegenstände sind mit den gleichen Bezugszeichen wie in den Figuren 1 und 2 bezeichnet und es wird auf die Beschreibung zu den Figuren 1 und 2 verwiesen. Der Fahrer betätigt das Kupplungspedal 44, welches nicht in der Figur 2 eingezeichnet ist, und wählt dann den Stau- und/oder Parkassistent 50 aus. Der Betätigungsknopf 50 weist eine Anzeige 52 auf, die den jeweiligen Modus der hydraulischen Kupplungsbetätigung 10 anzeigen kann. Die Anzeige ist bevorzugt eine Farbanzeige 52.

Hierbei muss der Aktuator 20 in die Position "Auskuppeln" fahren, wobei der Speicherkolben 30 und der Aktuatorkolben 24 den gleichen Hub haben werden, da die Kolbenflächen 34 und 36 gleich groß sind. Hierbei ist die Kolbenfläche 34 die Aktuatorkolbenfläche 34 und die Kolbenfläche 36 die Speicherkolbenfläche 36.

Das Ventil 18 kann geschlossen werden. Hierbei wird die Anzeige 52 "grün" anzeigen, da die Ausrückfunktion durch die MT übernommen ist, die Druckteilleitung 16a und 16b getrennt sind und der Nehmer 14 über die Druckteilleitung 16c angesteuert wird. Der Fahrer kann in diesem Modus das Kupplungspedal 44 loslassen. Die Hydraulikflüssigkeit geht vom Speicher 26 zum Geber 12, insbesondere in den Geberzylinder 42. Der Aktuator 20 hat die Betätigung des Nehmers 14 und damit der Kupplung übernommen. Der Aktuator 20, das Ventil 18sind bestromt.

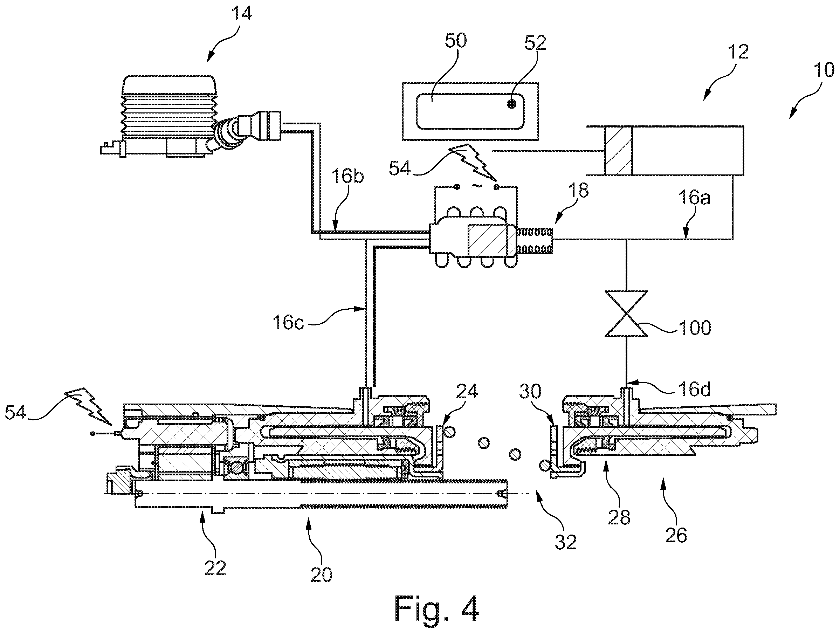

Figur 4 zeigt die Kupplungsbetätigungsvorrichtung 10 in dem Modus "Automatik". Gleiche Gegenstände sind mit den gleichen Bezugszeichen wie in den Figuren 1,2 und 3 bezeichnet und es wird auf die Beschreibung zu den Figuren 1, 2 und 3 verwiesen.

Wenn ein nicht dargestelltes Kupplungspedal 44 betätigt wird, wird der Aktuatorkolben 24 über den Speicher 26 betätigt, wobei das Ventil 18 bestromt bleibt und damit geschlossen bleibt. Die Hydraulikflüssigkeit kann zwischen der Druckteilleitung 16b und der Druckleitung 16c strömen.

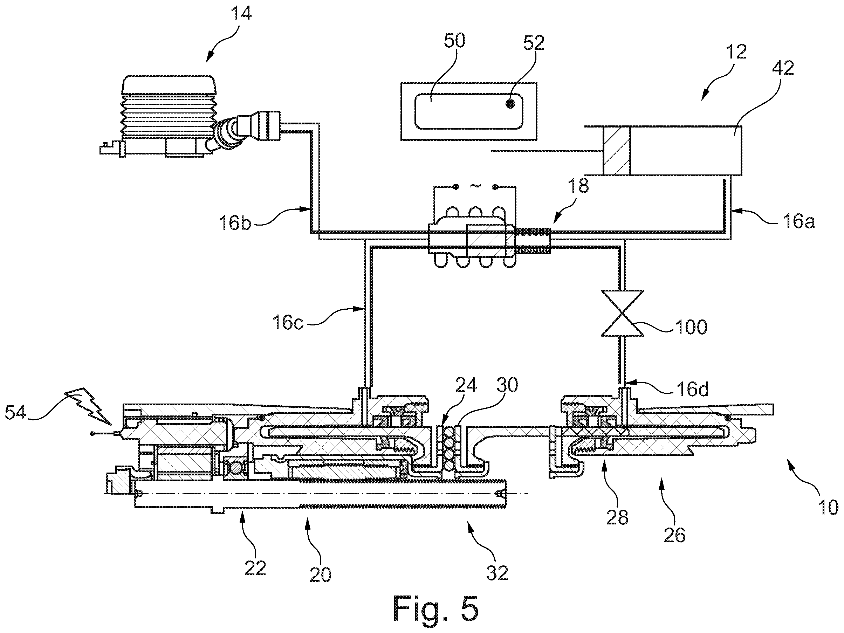

Figur 5 zeigt die Kupplungsbetätigungsvorrichtung 10 in dem Modus "Aktuator ausschalten". Gleiche Gegenstände sind mit den gleichen Bezugszeichen wie in den Figur 1,2, 3 und 4 bezeichnet und es wird auf die Beschreibung zu den Figuren 1, 2, 3 und 4 verwiesen.

Wenn der Fahrer die Kontrolle zurücknehmen möchte, wird er den Geber 12 betätigen. Dies erfolgt indem das Kupplungspedal 46 gedrückt wird. Der Druck in den Druckteilleitungen 16a und 16b, und damit vor und nach dem Ventil 18, ist hierbei gleich. Es liegt die Situation vor: p_{Geber} = p_{Nehmer}. Die Anzeige 52 zeigt "rot". Der Aktuator 20 wird in die Position gehen, bei der der Aktuatorkolben 24 in die Ursprungsposition zurückgehen wird und bei der der Druck auf den Aktuatorkolben 24 gleich dem Druck auf den Speicherkolben 30 ist. Die Hydraulikflüssigkeit ist in allen Druckteilleitungen 16a, 16b, 16c und 16d anliegend. Die Feder 32 ist zusammengedrückt und übt hierbei eine axiale Kraft auf den Aktuatorkolben 24 aus.

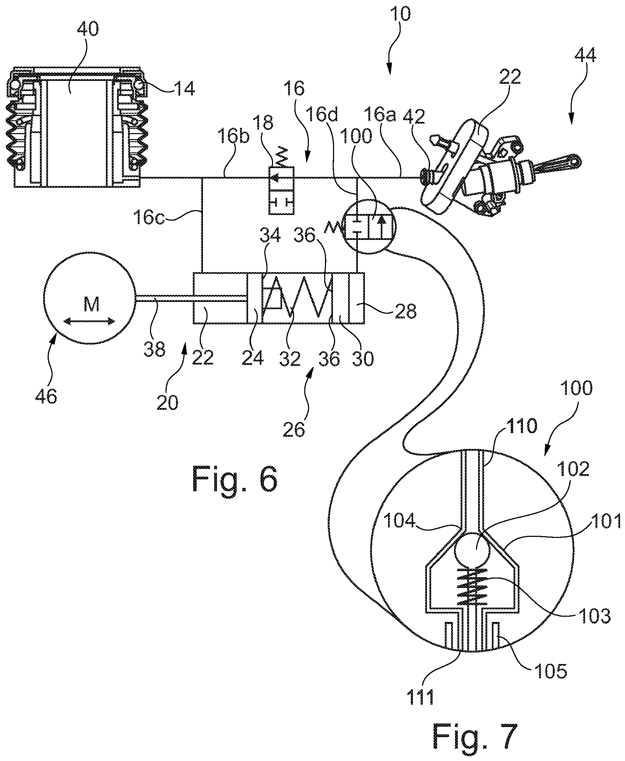

Die Figur 6 zeigt ein Ausführungsbeispiel gemäß Figur 1, wobei zusätzlich in der Speicher-Druckteilleitung 16d ein weiteres Ventil 100 angeordnet ist, welches im stromlosen Zustand die Speicher-Druckleitung 16d zwischen Aktuatorzylinder 22 und Speicherzylinder 28 verschließt und welches im bestromten Betriebszustand die Speicher-Druckleitung 16d öffnet.

Dadurch kann im nicht bestromten Zustand, falls der Speicherzylinder 28 fähig ist Flüssigkeit aufzunehmen, diese Flüssigkeit nicht in den Speicherzylinder 28 aufgenommen werden und der Speicherzylinder 28 ist dadurch abgesperrt. So bleibt die benötigte Flüssigkeit im System, wenn in der eingekuppelten Position der Kupplung die Lüftungs- oder Schnüffelbohrung des Geberzylinders 42 geöffnet ist. Die Feder 32 bleibt also zusammengedrückt, so dass ein von einem Pedal aufgebauter Druck im Geberzylinder 42 auf den Nehmerzylinder 40 übertragen wird und die Kupplung auch bei ausgefallener Stromversorgung pedalbetätigt ein- oder ausgerückt werden kann.

Die Figur 7 zeigt eine Darstellung eins weiteren Ventils 100 mit einem Gehäuse 101, wobei das Gehäuse 101 über zwei Anschlüsse 110, 111 in die Speicher-Druckleitung 16d integrierbar ist. In dem Gehäuse 101 ist ein verlagerbares Ventilelement 102 aufgenommen, welches von einer Feder 103 gegen eine Öffnung 104 bzw. gegen einen Sitz um eine Öffnung 104 beaufschlagbar ist. Dabei ist ein Aktuator 105, wie beispielsweise ein Elektromagnet, vorgesehen, welcher das Ventilelement 102 entgegen der Rückstellkraft der Feder 103 im bestromten Zustand von der Öffnung 104 abhebt und die Fluidkommunikation durch das Gehäuse zulässt. Dies bedeutet, dass das weitere Ventil 100 im normalen, bestromten Betriebszustand geöffnet ist und im stromlosen Zustand geschlossen ist. Der Aktuator 105 entwickelt im stromlosen Zustand im Wesentlichen keine Kraftwirkung auf das Ventilelement 102, so dass das Ventilelement 102 im stromlosen Zustand gegen die Öffnung 104 beaufschlagt ist und diese Öffnung 104 in Richtung Aktuatorzylinder 22 verschließt. Das Fluid kann in diesem Zustand aber immer noch in Richtung des Speicherzylinders 28 strömen.

So wie die Figur 6 das Ventil 100 in einer Vorrichtung gemäß Figur 1 zeigt, sind auch in den anderen Ausführungsvarianten der Figuren 2 bis 5 Anordnungen eines weiteren Ventils 100 in der Speicher-Druckteilleitung 16d möglich. Dies wird jedoch nicht noch einmal explizit dargestellt.

### Bezugszeichenliste

- 10: Kupplungsbetätigungsvorrichtung
- 12: Geber
- 14: Nehmer
- 16: Druckleitung
- 16a: Druckleitung
- 16b: Druckleitung
- 16c: Druckleitung
- 16d: Druckleitung
- 18: Ventil
- 20: Aktuator
- 22: Aktuatorzylinder
- 24: Aktuatorkolben
- 26: Speicher
- 28: Speicherzylinder
- 30: Speicherkolben
- 32: Feder, Federeinrichtung
- 34: Aktuatorkolbenfläche
- 36: Speicherkolbenfläche
- 38: Verbindung, insbesondere Wirkverbindung zwischen Aktuator und einem Motor
- 40: Nehmerzylinder
- 42: Geberzylinder
- 44: Kupplungspedal
- 46: Motor
- 50: Betätigungsknopf
- 52: Anzeige des Betätigungsknopfes 50
- 54: Symbol für Strom liegt an
- 56: Symbol für Stromausfall, kein Strom liegt an
- 100: Ventil
- 101: Gehäuse
- 102: Ventilelement
- 103: Feder
- 104: Öffnung
- 105: Aktuator
- 110: Anschluss
- 111: Anschluss

## Patentansprüche

1. Kupplungsbetätigungsvorrichtung, insbesondere für ein Kraftfahrzeug, mit einem, einen Geberzylinder (42) aufweisenden Geber (12), einem einen Nehmerzylinder (40) aufweisenden Nehmer (14) und einer den Geberzylinder (42) und den Nehmerzylinder (40) verbindende Druckleitung (16), wobei in der Druckleitung (16) ein Ventil (18) angeordnet ist, wodurch die Druckleitung (16) in eine Nehmer-Druckteilleitung (16b) und eine Geber-Druckteilleitung (16a) unterteilt ist, wobei in Parallelschaltung zur Druckleitung (16) eine ansteuerbare Einrichtung (20, 26, 32) angeordnet ist, **dadurch gekennzeichnet, dass** die ansteuerbare Einrichtung (20), insbesondere der Aktuator (20), mit einem Motor (46) verbunden und durch den Motor (46) antreibbar ist.

2. Kupplungsbetätigungsvorrichtung nach Anspruch 1, **dadurch gekennzeichnet, dass** in Parallelschaltung zur Druckleitung (16) ein Aktuator (20) mit einem Aktuatorzylinder (22) und einem Aktuatorkolben (24) sowie ein Speicher (26) mit einem Speicherzylinder (28) und einem Speicherkolben (30) angeordnet sind, wobei der Aktuator (20) mit der Nehmer-Druckteilleitung (16c) und der Speicher (26) mit der Geber-Druckteilleitung (16d) verbunden sind.

3. Kupplungsbetätigungsvorrichtung nach Anspruch 2, **dadurch gekennzeichnet, dass** der Aktuatorzylinder (22) und der Speicherzylinder (28) axial, insbesondere gegeneinander arbeitend, angeordnet sind.

4. Kupplungsbetätigungsvorrichtung nach einem der Ansprüche 2 oder 3, **dadurch gekennzeichnet, dass** der Aktuatorkolben (24) und der Speicherkolben (30) mittels einer Federeinrichtung (32) mechanisch verbunden sind.

5. Kupplungsbetätigungsvorrichtung nach einem der vorhergehenden Ansprüche, **dadurch gekennzeichnet, dass** das Ventil (18) ein erstes Ventil ist, insbesondere ein elektrisches Ventil, und elektrisch öffenbar und/oder verschließbar ist.

6. Kupplungsbetätigungsvorrichtung nach einem der vorhergehenden Ansprüche, **dadurch gekennzeichnet, dass** das Ventil (18) so eingerichtet ist, dass das Ventil (18) bei einem Druck p_{Geber}>p_{Nehmer} geöffnet ist.

7. Kupplungsbetätigungsvorrichtung nach einem der Ansprüche 2 - 6, **dadurch gekennzeichnet, dass** eine Aktuatorkolbenfläche (34) gleich einer Speicherkolbenfläche (36) ist.

8. Kupplungsbetätigungsvorrichtung nach einem der Ansprüche 2 - 7, **dadurch gekennzeichnet, dass** zwischen dem Geberzylinder (42) und dem Speicherzylinder (28) ein weiteres Ventil (100) angeordnet ist, welches die Geber-Druckteilleitung (16d) im stromlosen Zustand abschließt.

9. Kupplungsbetätigungsvorrichtung nach Anspruch 8, **dadurch gekennzeichnet, dass** das weitere Ventil (100) im normalen, bestromten Betriebszustand geöffnet ist.

10. Kupplungsbetätigungsvorrichtung nach Anspruch 8 oder 9, dadurch gekenn-zeichnet, dass das weitere Ventil (100) ein Gehäuse (101) und ein Ventilelement (102) aufweist, das von einer Feder (103) gegen eine Öffnung (104) beaufschlagt ist und einen Aktuator (105) aufweist, der im bestromten Zustand das Ventilelement (102) entgegen der Rückstellkraft der Feder (103) von der Öffnung (104) abhebt.

11. Kupplungsbetätigungsvorrichtung nach Anspruch 10, **dadurch gekennzeichnet, dass** der Aktuator (105) im stromlosen Zustand im Wesentlichen keine Kraftwirkung auf das Ventilelement (102) ausübt und daher das Ventilelement (102) gegen die Öffnung (104) beaufschlagt ist und diese verschließt.

12. Schaltgetriebe, insbesondere für ein Kraftfahrzeug, mit einer, insbesondere hydraulischen, Kupplungsbetätigungsvorrichtung (10) nach einem der Ansprüche 1 bis 11.

## Claims

1. Clutch actuating apparatus, in particular for a motor vehicle, having a master (12) which has a master cylinder (42), a slave (14) which has a slave cylinder (40), and a pressure line (16) which connects the master cylinder (42) and the slave cylinder (40), a valve (18) being arranged in the pressure line (16), as a result of which the pressure line (16) is divided into a slave pressure part line (16b) and a master pressure part line (16a), an actuable device (20, 26, 32) being arranged in a parallel connection with respect to the pressure line (16), **characterized in that** the actuable device (20), in particular the actuator (20), is connected to a motor (46) and can be driven by way of the motor (46).

2. Clutch actuating apparatus according to Claim 1, **characterized in that** an actuator (20), with an actuator cylinder (22) and an actuator piston (24), and an accumulator (26), with an accumulator cylinder (28) and an accumulator piston (30), are arranged in a parallel connection with respect to the pressure line (16), the actuator (20) being connected to the slave pressure part line (16c), and the accumulator (26) being connected to the master pressure part line (16d).

3. Clutch actuating apparatus according to Claim 2, **characterized in that** the actuator cylinder (22) and the accumulator cylinder (28) are arranged axially, in particular so as to operate counter to one another.

4. Clutch actuating apparatus according to either of Claims 2 and 3, **characterized in that** the actuator piston (24) and the accumulator piston (30) are connected mechanically by means of a spring device (32).

5. Clutch actuating apparatus according to one of the preceding claims, **characterized in that** the valve (18) is a first valve, in particular an electric valve, and can be opened and/or closed electrically.

6. Clutch actuating apparatus according to one of the preceding claims, **characterized in that** the valve (18) is set up in such a way that the valve (18) is open at a pressure pₘₐₛₜₑᵣ > pₛₗₐᵥₑ.

7. Clutch actuating apparatus according to one of Claims 2 to 6, **characterized in that** an actuator piston surface area (34) is equal to an accumulator piston surface area (36).

8. Clutch actuating apparatus according to one of Claims 2 to 7, **characterized in that** a further valve (100) is arranged between the master cylinder (42) and the accumulator cylinder (28), which further valve (100) closes the master pressure part line (16d) in the currentless state.

9. Clutch actuating apparatus according to Claim 8, **characterized in that** the further valve (100) is open in the normal, energized operating state.

10. Clutch actuating apparatus according to Claim 8 or 9, **characterized in that** the further valve (100) has a housing (101) and a valve element (102) which is loaded against an opening (104) by a spring (103) and has an actuator (105) which, in the energized state, lifts the valve element (102) from the opening (104) counter to the restoring force of the spring (103).

11. Clutch actuating apparatus according to Claim 10, **characterized in that**, in the currentless state, the actuator (105) exerts substantially no force action on the valve element (102), and therefore the valve element (102) is loaded against the opening (104) and closes the latter.

12. Manual transmission, in particular for a motor vehicle, having an (in particular hydraulic) clutch actuating apparatus (10) according to one of Claims 1 to 11.

## Revendications

1. Dispositif d'actionnement d'embrayage, en particulier pour un véhicule automobile, comprenant un émetteur (12) présentant un cylindre émetteur (42), un récepteur (14) présentant un cylindre récepteur (40) et une conduite de pression (16) reliant le cylindre émetteur (42) et le cylindre récepteur (40), une soupape (18) étant disposée dans la conduite de pression (16), de manière à diviser la conduite de pression (16) en une conduite partielle de pression de récepteur (16b) et une conduite partielle de pression d'émetteur (16a), un dispositif commandable (20, 26, 32) étant disposé suivant un montage en parallèle avec la conduite de pression (16), **caractérisé en ce que** le dispositif commandable (20), en particulier l'actionneur (20), est connecté à un moteur (46) et peut être entraîné par le moteur (46).

2. Dispositif d'actionnement d'embrayage selon la revendication 1, **caractérisé en ce qu'**un actionneur (20) avec un cylindre d'actionneur (22) et un piston d'actionneur (24) ainsi qu'un accumulateur (26) avec un cylindre d'accumulateur (28) et un piston d'accumulateur (30) sont disposés suivant un montage en parallèle avec la conduite de pression (16), l'actionneur (20) étant connecté à la conduite partielle de pression de récepteur (16c) et l'accumulateur (26) étant connecté à la conduite partielle de pression d'émetteur (16d).

3. Dispositif d'actionnement d'embrayage selon la revendication 2, **caractérisé en ce que** le cylindre d'actionneur (22) et le cylindre d'accumulateur (28) sont disposés axialement, notamment de manière à fonctionner en opposition.

4. Dispositif d'actionnement d'embrayage selon l'une quelconque des revendications 2 ou 3, **caractérisé en ce que** le piston d'actionneur (24) et le piston d'accumulateur (30) sont connectés mécaniquement au moyen d'un dispositif de ressort (32).

5. Dispositif d'actionnement d'embrayage selon l'une quelconque des revendications précédentes, **caractérisé en ce que** la soupape (18) est une première soupape, notamment une soupape électrique, et peut être ouverte et/ou fermée de manière électrique.

6. Dispositif d'actionnement d'embrayage selon l'une quelconque des revendications précédentes, **caractérisé en ce que** la soupape (18) est conçue de telle sorte que la soupape (18) soit ouverte à une pression p_{émetteur} > p_{récepteur}.

7. Dispositif d'actionnement d'embrayage selon l'une quelconque des revendications 2 à 6, **caractérisé en ce qu'**une surface de piston d'actionneur (34) est identique à une surface de piston d'accumulateur (36).

8. Dispositif d'actionnement d'embrayage selon l'une quelconque des revendications 2 à 7, **caractérisé en ce qu'**entre le cylindre émetteur (42) et le cylindre d'accumulateur (28) est disposée une soupape supplémentaire (100), qui ferme la conduite partielle de pression d'émetteur (16d) dans l'état non alimenté en courant.

9. Dispositif d'actionnement d'embrayage selon la revendication 8, **caractérisé en ce que** la soupape supplémentaire (100) est ouverte dans l'état de fonctionnement normal alimenté en courant.

10. Dispositif d'actionnement d'embrayage selon la revendication 8 ou 9, **caractérisé en ce que** la soupape supplémentaire (100) présente un boîtier (101) et un élément de soupape (102) qui est sollicité par un ressort (103) contre une ouverture (104) et qui présente un actionneur (105) qui, dans l'état alimenté en courant, soulève de l'ouverture (104) l'élément de soupape (102) à l'encontre de la force de rappel du ressort (103).

11. Dispositif d'actionnement d'embrayage selon la revendication 10, **caractérisé en ce que** l'actionneur (105), dans l'état non alimenté en courant, n'exerce essentiellement aucune force sur l'élément de soupape (102) et de ce fait l'élément de soupape (102) est sollicité contre l'ouverture (104) et ferme cette dernière.

12. Boîte de vitesses, en particulier pour un véhicule automobile, comprenant un dispositif d'actionnement d'embrayage (10), notamment hydraulique, selon l'une quelconque des revendications 1 à 11.
